Europäisches Patentamt

European Patent Office

Office européen des brevets

(19)

(11) **EP 1 555 183 A1**

## (12) DEMANDE DE BREVET EUROPEEN

(43) Date de publication:
**20.07.2005 Bulletin 2005/29**

(51) Int Cl.⁷: $B60T\ 8/00$, $G05B\ 13/02$

(21) Numéro de dépôt: **05000246.8**

(22) Date de dépôt: **07.01.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **16.01.2004 FR 0400428**

(71) Demandeurs:
• **Société de Technologie Michelin**
  **63000 Clermont-Ferrand (FR)**
• **Michelin Recherche et Technique S.A.**
  **1763 Granges-Paccot (CH)**

(72) Inventeurs:
• **Fangeat, Nicolas**
  **63400 Chamalieres (FR)**
• **Levy, Georges**
  **Chiyoda-Ku 102-8176 Tokyo (JP)**

(74) Mandataire: **Bauvir, Jacques**
  **M.F.P. Michelin,**
  **SGD/LG/PI-F35-Ladoux**
  **63040 Clermont-Ferrand Cedex 09 (FR)**

(54) **Système de test d'un pneumatique utilisant un algorithme analysant la variation au cours du temps d'un paramètre représentatif**

(57)      Système de test , le système comportant des moyens pour imprimer au pneu un effort longitudinal et des moyens pour calculer le paramètre glissement $G^{Opt}$ lors de chaque activation des moyens pour imprimer au pneu un effort longitudinal de la façon suivante : au fur et à mesure de l'acquisition des valeurs de G;, calculer la variation par rapport au temps de G, tant que ladite variation est supérieure à un seuil bas, calculer des coefficients $A_{[wet,p]}$ par calcul direct ou par une régression appropriée de façon à modéliser la variation par rapport au temps de G par une courbe de variation qui est une fonction de $(G_i, A_{[wet,p]})$, dès que ladite variation est supérieure à un seuil haut, déterminer un glissement cible $G^{Cwet}$ en utilisant au moins les dernières valeurs de $A_{[wet,p]}$.

Figure 1

**Description**

DOMAINE DE L'INVENTION

La présente invention se rapporte aux méthodes de test des pneumatiques.

ETAT DE LA TECHNIQUE

Pour rappel, le coefficient d'adhérence longitudinale μ du pneumatique est le quotient de la force longitudinale divisée par la force verticale appliquée, c'est à dire la charge appliquée sur le pneumatique (dans le cas simplifié d'un effort de freinage pur et l'homme du métier saura facilement généraliser) ; le glissement G du pneumatique vaut G = 0% lorsqu'il n'y a pas de glissement entre la vitesse du pneumatique et la vitesse du véhicule roulant sur ledit pneumatique, c'est à dire si le pneu roule librement, et G = 100% si le pneu est bloqué en rotation. Typiquement, en fonction de l'environnement (nature du sol (asphalte, béton), sec ou mouillé (hauteur d'eau), température et niveau d'usure du pneumatique), la valeur de μ en fonction du glissement G et de la nature du sol peut varier énormément ($\mu_{max}$ vaut environ 0.15 sur de la glace et environ 1.2 sur un sol sec).

Par la demande de brevet EP 1372049 publiée le 17 décembre 2003, on connaît déjà un procédé de régulation du glissement utilisant une grandeur appelée « Invariant » que les recherches des inventeurs ont permis de découvrir, cette grandeur étant ainsi appelée parce qu'elle est sensiblement constante quel que soit le pneu considéré et quelle que soit l'adhérence du sol sur lequel le pneu roule.

Si ce procédé permet de déterminer une cible de glissement pour lequel on est effectivement bien plus proche du coefficient d'adhérence maximal réel du pneu dans les circonstances de roulage réelles, il existe cependant des cas où l'on peut déterminer une cible meilleure encore pour que le pneu développe les forces souhaitées.

Le système de test d'un pneumatique proposée par l'invention, que ce soit pour une mesure ou un test sur machine ou sur véhicule, permet en particulier d'asservir le glissement G de façon à le maintenir à une valeur cible prédéterminé. Ledit glissement cible prédéterminé est plus particulièrement et de façon non limitative, choisi de telle sorte que la valeur prédéterminée du coefficient d'adhérence corresponde sensiblement à la valeur $\mu_{max}$.

BREVE DESCRIPTION DE L'INVENTION

L'invention propose un algorithme appelé « Mouillé » permettant de prédire une cible idéale pour un paramètre dont on assure le pilotage dans un système de test d'un pneu.

Dans une formulation générale, l'invention propose un système de test d'un pneumatique dans lequel un paramètre caractéristique Q du fonctionnement d'un pneumatique destiné à rouler sur un sol varie en fonction d'un paramètre P selon une certaine loi, une valeur optimale dudit paramètre P étant imposée par un contrôleur de manière directe ou indirecte de façon à agir sur au moins l'un des éléments choisis dans le groupe comportant le couple de rotation appliqué au pneumatique, l'angle de braquage du pneumatique, l'angle de carrossage du pneumatique et la force verticale appliquée au pneumatique, dans lequel le contrôleur comporte des moyens pour :

- Au fur et à mesure de l'acquisition des valeurs de $P_i$, calculer la variation par rapport au temps de P,
- Tant que ladite variation est supérieure à un seuil bas, calculer des coefficients $A_{[wet,p]}$ par calcul direct ou par une régression appropriée de façon à modéliser la variation par rapport au temps de P par une courbe de variation qui est une fonction de ($P_i$, $A_{[wet, p]}$),
- Dès que ladite variation est supérieure à un seuil haut, déterminer un glissement cible $P^{Cwet}$ en utilisant au moins les dernières valeurs de $A_{[wet, p]}$.

Le résultat recherché est de maintenir la valeur d'un paramètre Q à une valeur choisie en fonction de l'objectif du test. Dans le présent mémoire, on décrit en détails une application au contrôle du glissement d'un pneu, typiquement pendant une manoeuvre de freinage. Enfin, on évoque une application visant au contrôle de la dérive du pneu.

L'invention propose un système de test d'un pneumatique, dans lequel le paramètre P est le glissement G du pneumatique et le paramètre caractéristique Q est le coefficient d'adhérence μ du pneumatique, utilisant des moyens pour imprimer à un pneu destiné à rouler sur le sol un effort longitudinal, des moyens de modulation de l'effort longitudinal utilisant au moins un paramètre « glissement cible » qui est le glissement visé dans la rotation du pneu sur le sol, et des moyens pour calculer ledit paramètre glissement $G^{Opt}$ lors de chaque activation des moyens pour imprimer au pneu un effort longitudinal, pour des niveaux « i » successifs de l'effort longitudinal correspondant chacun à un glissement $G_i$, de la façon suivante :

- Au fur et à mesure de l'acquisition des valeurs de $G_i$, calculer la variation par rapport au temps de G,
- Tant que ladite variation est supérieure à un seuil bas, calculer des coefficients $A_{[wet, p]}$ par calcul direct ou par une régression appropriée de façon à modéliser la variation par rapport au temps de G par une courbe de variation qui est une fonction de ($G_i$, $A_{[wet, p]}$),
- Dès que ladite variation est supérieure à un seuil haut, déterminer un glissement cible $G^{Cwet}$ en utilisant au moins les dernières valeurs de $A_{[wet, p]}$.

L'application de choix de la présente invention réside dans le pilotage du glissement d'une roue en freinage sur une machine ou un véhicule de test. Toute la description suivante concerne dans ce cas un dispositif de modulation de l'effort longitudinal qui agit sur la commande de freinage. Indiquons une fois pour toutes que dans ce cas, on initialise (i=0) les opérations indiquées ci-dessus, et plus en détails ci-dessous, à chaque début de manoeuvre de freinage. Mais si l'on décide d'appliquer la présente invention au pilotage du glissement d'une roue en accélération, le dispositif de modulation de l'effort longitudinal agit sur le couple moteur aux roues et on initialise (i=0) les opérations indiquées à chaque demande de variation du couple moteur supérieure à un seuil de couple prédéterminé.

Notons aussi que, dans le contexte de la présente invention, peu importe que la bande de roulement dont on traite la caractéristique d'adhérence soit celle d'un pneumatique ou d'un bandage élastique non pneumatique ou encore d'une chenille. Les termes « bande de roulement », « pneu » ou « pneumatique », « bandage », « bandage élastique », « chenille » ou même « roue » doivent être interprétés comme équivalents. Remarquons aussi que la détermination des valeurs du coefficient d'adhérence $\mu_i$, pour chaque glissement $G_i$ peut se faire par mesure directe ou par estimation à partir d'autres mesures ou de l'estimation d'autres grandeurs comme l'effort dans le plan du sol et la charge verticale.

BREVE DESCRIPTION DES FIGURES

Les figures suivantes montrent :

La figure 1 illustre l'algorithme Mouillé ;
La figure 2 illustre un traitement particulier des premières acquisitions de mesures ou d'estimations ;
La figure 3 illustre plus en détails ledit traitement particulier ;
La figure 4 illustre un autre traitement particulier des acquisitions de mesures ou d'estimations.

DESCRIPTION DU MEILLEUR MODE DE REALISATION DE L'INVENTION

Comme son nom l'indique, cet algorithme est plus particulièrement conçu pour le calcul de cible sur sol mouillé (en fait tous les sols de faible adhérence). En effet, sur ce type de sol, la roue va très rapidement au blocage et l'on risque de s'apercevoir trop tard que le maximum de la courbe $\mu(G)$ est dépassé.

Le principe de cet algorithme consiste à étudier l'évolution de la dérivée du glissement en fonction du temps. Si l'on constate une évolution trop rapide, c'est à dire en fait un changement du glissement trop rapide, on peut présumer que le système n'est plus stable parce que l'on a dépassé ou l'on est en passe de dépasser le glissement correspondant à l'adhérence maximale.

De préférence, ledit algorithme n'est utilisé qu'avec des valeurs de glissement supérieures à de 4%. De façon avantageuse, ledit seuil bas est de l'ordre de 100% par seconde et ledit seuil haut est de l'ordre de 300% par seconde.

Une application simple de cet algorithme utilise une régression linéaire, ce qui fait que l'on calcule des coefficients $A_{wet}$ et $B_{wet}$ de la façon suivants :

- $$\frac{dG}{dt} = A^{WET} \cdot G + B^{WET}$$

et le glissement cible $G^{Cwet}$ est donc déterminé de la façon suivante :

- $$G^{Cwet} = \frac{dG\_tgt - B^{WET}}{A^{WET}}.$$

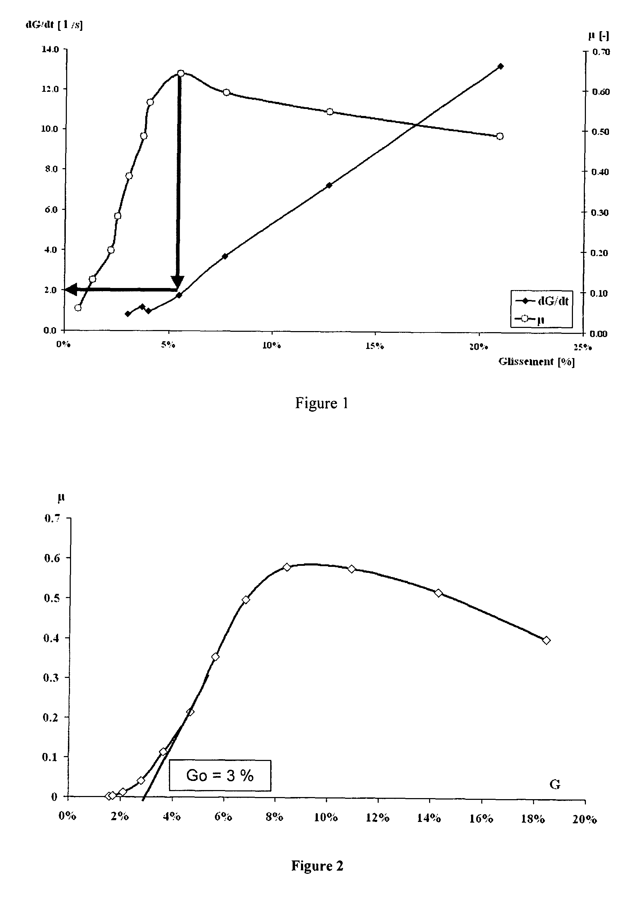

Bien qu'une valeur expérimentale de 200% par seconde (voir figure 1) pour le paramètre « dG_tgt » ait donné de bons résultats, on peut en pratique utiliser arbitrairement ce paramètre comme un bouton de réglage fin du fonctionnement pratique du système de test d'un pneumatique, tout comme évoqué à propos des paramètres $\beta$ et Invariant.

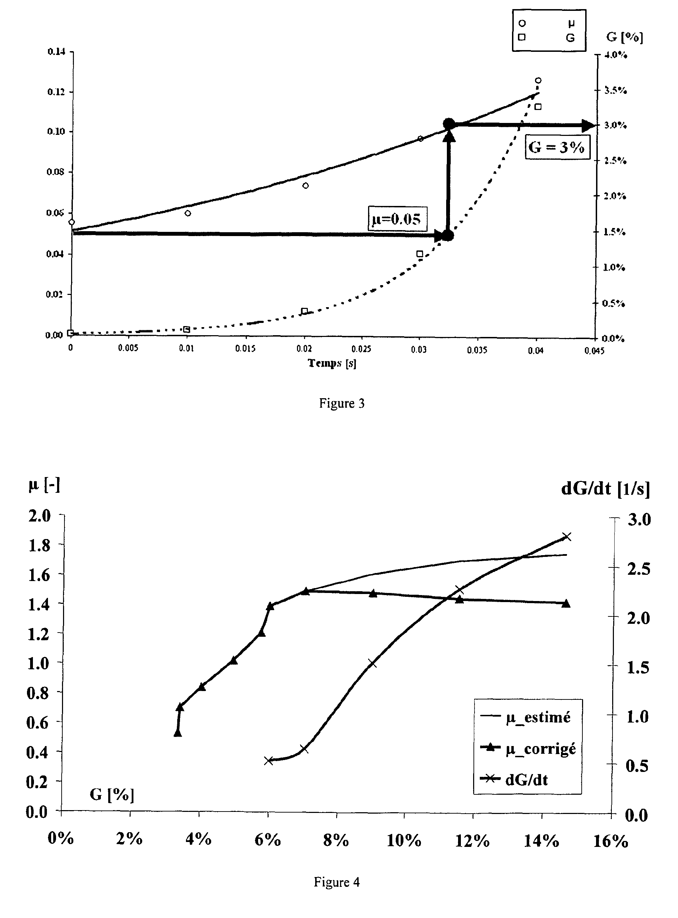

Il est proposé ci-dessous quelques corrections aux valeurs faibles de glissement et coefficient d'adhérence obtenues au tout début d'une manoeuvre de freinage. Au début des freinages, il a été constaté que la courbe $\mu(G)$ peut présenter un comportement étrange. Le but de cette première partie de l'algorithme est de corriger ce comportement. Aux figures 2 et 3, on peut voir que sur un sol mouillé, le pied de la courbe $\mu(G)$ ne semble pas linéaire et que pour un $\mu$ nul, le glissement ne l'est pas. Ceci est probablement dû aux erreurs dans la valeur du glissement mesuré. Cela n'est à l'évidence pas représentatif des phénomènes physiques dans le contact de la bande de roulement sur le sol. Cela est gênant pour les algorithmes de calcul du glissement cible qui sont basés sur l'étude de la pente de la courbe $\mu(G)$. Bien entendu, cela est très dépendant des moyens technologiques concrets mis en oeuvre pour acquérir ces informations. Dès lors, les indications fournies dans ce contexte sont de simples suggestions qu'il est utile d'appliquer si l'on fait face à ce problème, mais qui ne sont pas limitatives. Plus généralement, il est utile de corriger autoritairement la forme du pied de la courbe de variation du coefficient d'adhérence en fonction du glissement si elle présente une allure fort peu plausible.

La première partie du traitement des données va donc constituer à calculer la valeur du glissement à partir de laquelle on peut utiliser les données pour calculer de façon fiable un glissement cible ou le glissement optimal. Convenons d'appeler ce glissement $G_0$. La figure 2 montre que ce glissement $G_0$ vaut environ 3%. On obtient une allure plus plausible de la courbe $\mu$

(G) en reliant $G_0$ à la partie sensiblement linéaire de la partie croissante de la courbe.

Dès lors, de préférence, avant toutes les opérations exploitant la courbe de variation de $\mu_i$ en fonction de $G_i$, on procède à une correction du départ de ladite courbe en éliminant les premières paires réelles ($\mu_i$, G;) tant que la variation de $\mu_i$ en fonction de $G_i$ n'est pas sensiblement constante et en recherchant le glissement $G_0$ associé à un coefficient d'adhérence nul (ceci n'étant bien entendu pas limitatif) tel que la paire (0, $G_0$) et les paires non éliminées ($\mu_i$, $G_i$) sont sensiblement alignées, et utilisant une courbe partant de (0, $G_0$) et rejoignant les paires non éliminées ($\mu_i$, $G_i$), de sorte que, pour toute valeur de $G_i$ plus grande que $G_0$, $G_i$ est remplacée par $G_i$ - $G_0$.

Pour cela, par exemple, on utilise un algorithme qui comporte les étapes suivantes:

- éliminer systématiquement toutes les valeurs du glissement associées à un coefficient d'adhérence inférieur à 0,01 ;
- Calculer de façon continue des régressions de $\mu$ et G en fonction du temps, de préférence des régressions exponentielles vu l'allure du pied de la courbe dans l'exemple illustré au moyen de la figure 2 et de la figure 3 :

$$\mu = e^{A^{\mu}.(t-T^{Start})+B^{\mu}}, \ G = e^{A^{G}\cdot(t-T^{Star})+B^{G}}$$

On peut considérer que les valeurs acquises sont représentatives de la réalité lorsque le coefficient d'adhérence estimé ou mesuré est supérieur à 0,1 ou lorsque le glissement dépasse 4%.

La figure 3 illustre la façon de déterminer $G_0$ à partir des courbes donnant les valeurs acquises respectivement pour le coefficient d'adhérence en fonction du temps et pour le glissement en fonction du temps. On cherche la valeur du temps pour laquelle la régression sur la courbe de $\mu$ vaut une certaine valeur, par exemple 0,05 (voir le segment horizontal entre une abscisse nulle et une ordonnée valant 0,05 et la courbe en pointillés). La valeur de $G_0$ sera la valeur de la régression sur la courbe du glissement à cet instant (voir le segment vertical entre le point précédemment obtenu et un point sur la courbe en trait continu, donnant la valeur du glissement Go).

On procède donc, avant toutes les opérations exploitant la courbe de variation de $\mu_i$ en fonction de $G_i$, à une correction du départ de ladite courbe en éliminant les premières paires réelles ($\mu_i$, $G_i$) tant que la variation de $\mu_i$ en fonction de $G_i$ n'est pas sensiblement constante et en recherchant le glissement $G_0$ associé à un coefficient d'adhérence nul tel que la paire (0, $G_0$) et les paires non éliminées ($\mu_i$, $G_i$) sont sensiblement alignées, et utilisant une courbe partant de (0, $G_0$) et rejoignant les paires non éliminées ($\mu_i$, $G_i$). Ensuite, dans tous les algorithmes utilisés, pour toute valeur de $G_i$ plus grande que

$G_0$, $G_i$ est remplacée par $G_i$ - $G_0$.

On a jusqu'à présent supposé calculées ou estimées des valeurs de $\mu$. Cependant, dans certains cas, le mode d'obtention du coefficient d'adhérence (à partir de l'effort de freinage lui-même estimé sur la base de la pression de freinage compte tenu des caractéristiques particulières du système de freinage et à partir de la vitesse relative entre le sol et l'axe géométrique de rotation du pneumatique) ne donne pas de résultat satisfaisant (la courbe $\mu(G)$ calculée est trop plate ou continûment ascendante). On sait que cela n'est pas réaliste. Pour corriger ce problème, une correction numérique du $\mu$ calculé peut être mise en place. Cette correction est basée sur la vitesse d'évolution du glissement en fonction du temps. En effet, si la vitesse de la roue (et donc le glissement) s'emballe de façon rapide, c'est que l'on se trouve dans la zone instable de la courbe $\mu(G)$. Donc la courbe $\mu(G)$ devrait décroître, ce que l'on met à profit de la façon suivante :

$$\mu^{Corr} = \mu^{acquis} \cdot \left[ Max\left(\frac{dG}{dt};1\right) \right]^{-ACorr}$$

où « Acorr » est un coefficient de mise au point et peut être spécifique à chaque algorithme. Par exemple, une bonne valeur pratique s'est avérée être 0.2 pour l'algorithme «Moyen ». La figure 4 illustre cette correction. Grâce à cette correction, la courbe $\mu(G)$ retrouve une forme certainement plus conforme à la réalité physique, ce qui permet aux algorithmes de produire des cibles fiables.

Remarquons que, si la valeur du $\mu_{max}$ est en elle-même modifiée par cette correction, tous les algorithmes utilisés se basent sur la forme de la courbe et non sur ses valeurs. Le lecteur est également renvoyé à la demande de brevet précitée où l'on a fait ressortir que l'algorithme « Invariant » permet de calculer une cible de glissement sans même calculer la valeur exacte du coefficient d'adhérence associé, celui-ci étant inutile au bon fonctionnement de l'asservissement en glissement d'une la roue.

Dans la demande de brevet précitée, on a démontré la possibilité d'autre applications de l'algorithme « Invariant », par exemple à l'analyse de la poussée de dérive développée par un pneumatique ou bandage élastique dans une zone de fonctionnement proche de la saturation de la poussée de dérive. C'est en raison de la similarité des lois de variation de ces phénomènes physique. De la même façon, la présente invention a des applications plus larges que le contrôle du glissement au cours d'un test de pneumatique. Pour clore le sujet, citons simplement (sans que même cette addition ne soit limitative comme on l'aura compris) que l'invention s'applique aussi à un système de test d'un pneumatique visant à prédire la valeur de l'angle de dérive $\delta$

d'un pneumatique où la force latérale (dite aussi « poussée de dérive ») est maximale. Il s'agit de prévoir quand le pneu atteindra son maximum et donc ne sera plus capable de maintenir la poussée de dérive, afin de pouvoir maintenir le fonctionnement du pneumatique à une valeur prédéterminée de la poussée de dérive $F_{det}$. Pour maintenir le fonctionnement du pneumatique à une valeur prédéterminée, il est là aussi utile d'estimer une cible pour l'angle de dérive par un algorithme « Moyen ».

Dans ce cas, le paramètre P est l'angle de dérive δ du pneumatique et le paramètre caractéristique Q est la poussée de dérive $F^{det}$ du pneumatique. Il s'agit de prévoir quand le pneu atteindra la poussée transversale maximale qu'il est capable de développer. Pour maintenir le fonctionnement du pneumatique à une valeur prédéterminée, il est là aussi utile d'estimer une cible pour l'angle de dérive par un algorithme « Mouillé ».

Dans ce cas, l'invention concerne un système de test en glissement d'un pneumatique, utilisant des moyens pour imprimer un angle de dérive à un pneu en test sur un sol, les moyens étant équipé d'un système de commande d'un paramètre « ξ » en fonction des ordres provenant d'un moyen de commande du test, et en fonction des ordres délivrés par un contrôleur visant à maintenir le fonctionnement du pneumatique à une valeur prédéterminée de la poussée de dérive $F^{det}$, le contrôleur utilisant au moins une valeur optimale $\delta^{Opt}$ de l'angle de dérive correspondant à la valeur maximale de la poussée de dérive $F^{det}$, ledit contrôleur comportant des moyens pour effectuer les opérations suivantes :

- Au fur et à mesure de l'acquisition des valeurs de $\delta_i$, calculer la variation par rapport au temps de δ,
- Tant que ladite variation est supérieure à un seuil bas, calculer des coefficients $A_{[wet,p]}$ par calcul direct ou par une régression appropriée de façon à modéliser la variation par rapport au temps de P par une courbe de variation qui est une fonction de ($\delta_i$, $A_{[wet,p]}$),
- Dès que ladite variation est supérieure à un seuil haut, déterminer un glissement cible $\delta^{Cwet}$ en utilisant au moins les dernières valeurs de $A_{[wet,p]}$.

**Revendications**

1. Système de test d'un pneumatique, dans lequel un paramètre caractéristique Q du fonctionnement d'un pneumatique en test varie en fonction d'un paramètre P selon une certaine loi, une valeur optimale dudit paramètre P étant imposée par un contrôleur de manière directe ou indirecte de façon à agir sur au moins l'un des éléments choisis dans le groupe comportant le couple de rotation appliqué au pneumatique, l'angle de braquage du pneumatique, l'angle de carrossage du pneumatique et la force verticale appliquée au pneumatique, dans lequel le contrôleur comporte des moyens pour :

- Au fur et à mesure de l'acquisition des valeurs de $P_i$, calculer la variation par rapport au temps de P,
- Tant que ladite variation est supérieure à un seuil bas, calculer des coefficients $A_{[wet,p]}$ par calcul direct ou par une régression appropriée de façon à modéliser la variation par rapport au temps de P par une courbe de variation qui est une fonction de ($P_i$, $A_{[wet,p]}$),
- Dès que ladite variation est supérieure à un seuil haut, déterminer un glissement cible $P^{Cwet}$ en utilisant au moins les dernières valeurs de $A_{[wet, p]}$.

2. Système de test d'un pneumatique selon la revendication 1, dans lequel le paramètre P est le glissement G du pneumatique et le paramètre caractéristique Q est le coefficient d'adhérence µ du pneumatique, le système comportant des moyens pour imprimer au pneu un effort longitudinal, des moyens de modulation de l'effort longitudinal et des moyens pour calculer le paramètre glissement $G^{Opt}$ lors de chaque activation des moyens pour imprimer au pneu un effort longitudinal de la façon suivante :

- Au fur et à mesure de l'acquisition des valeurs de $G_i$, calculer la variation par rapport au temps de G,
- Tant que ladite variation est supérieure à un seuil bas, calculer des coefficients $A_{[wet,p]}$ par calcul direct ou par une régression appropriée de façon à modéliser la variation par rapport au temps de G par une courbe de variation qui est une fonction de ($G_;$, $A_{[wet, p]}$),
- Dès que ladite variation est supérieure à un seuil haut, déterminer un glissement cible $G^{Cwet}$ en utilisant au moins les dernières valeurs de $A_{[wet, p]}$.

3. Système de test en glissement d'un pneumatique selon la revendication 2, dans lequel on utilise une régression linéaire et on calcule les coefficients $A_{wet}$ et $B_{wet}$ de la façon suivants :

-
$$\frac{dG}{dt} = A^{WET} \cdot G + B^{WET}$$

et le glissement cible $G^{Cwet}$ est donc déterminé de la façon suivante :

-
$$G^{Cwet} = \frac{dG\_tgt - B^{WET}}{A^{WET}}.$$

4. Système de test en glissement d'un pneumatique selon la revendication 2 dans lequel « dG_tgt » est utilisé comme paramètre de mise au point.

**5.** Système de test en glissement d'un pneumatique selon l'une des revendications 2 à 4, dans lequel le dispositif de modulation de l'effort longitudinal agit sur la commande de freinage et on initialise (i=0) les opérations indiquées à chaque début de manoeuvre de freinage.

**6.** Système de test en glissement d'un pneumatique selon l'une des revendication 2 à 4, dans lequel le dispositif de modulation de l'effort longitudinal agit sur le couple moteur aux roues et on initialise (i=0) les opérations indiquées à chaque demande de variation du couple moteur supérieure à un seuil de couple prédéterminé.

**7.** Système de test en glissement d'un pneumatique selon l'une des revendications 2 à 6, dans lequel on procède, avant toutes les opérations exploitant la courbe de variation de $\mu_i$ en fonction de G;, à une correction du départ de ladite courbe en éliminant les premières paires réelles ($\mu_i$, $G_i$) tant que la variation de $\mu_i$ en fonction de $G_i$ n'est pas sensiblement constante et en recherchant le glissement $G_0$ associé à un coefficient d'adhérence nul tel que la paire (0, $G_0$) et les paires non éliminées ($\mu_i$, $G_i$) sont sensiblement alignées, et utilisant une courbe partant de (0, $G_0$) et rejoignant les paires non éliminées ($\mu_i$, $G_i$), de sorte que, pour toute valeur de $G_i$ plus grande que $G_0$, G; est remplacée par $G_i$ - $G_0$.

**8.** Système de test en glissement d'un pneumatique selon l'une des revendications 2 à 6 dans lequel, lorsque la variation par rapport au temps du glissement devient supérieure à un seuil de variation prédéterminé, on procède, avant toutes les opérations exploitant la courbe de variation de $\mu_i$ en fonction de $G_i$, à une correction de la fin de ladite courbe en remplaçant les valeurs de $\mu_i$ correspondant à des glissements amenant la variation par rapport au temps du glissement au-delà dudit seuil de variation prédéterminé, par des valeurs corrigées comme suit :

$$\mu_i^{Corr} = \mu_i \cdot \left[ Max\left( \frac{dG}{dt}; 1 \right) \right]^{-ACorr}$$

où « Acorr » est un paramètre prédéterminé.

**9.** Système de test en glissement d'un pneumatique selon la revendication 8, dans lequel « Acorr » vaut environ 0,2.

**10.** Système de test en glissement d'un pneumatique selon la revendication 8 dans lequel « Acorr » est utilisé comme paramètre de mise au point.

**11.** Système de test d'un pneumatique selon la revendication 1, utilisant des moyens pour imprimer un angle de dérive à un pneu en test sur un sol, les moyens étant équipé d'un système de commande d'un paramètre « ξ » en fonction des ordres provenant d'un moyen de commande du test, et en fonction des ordres délivrés par un contrôleur visant à maintenir le fonctionnement du pneumatique à une valeur prédéterminée de la poussée de dérive $F^{det}$, le contrôleur utilisant au moins une valeur optimale $\delta^{Opt}$ de l'angle de dérive correspondant à la valeur maximale de la poussée de dérive $F^{det}$, ledit contrôleur comportant des moyens pour effectuer les opérations suivantes :

- Au fur et à mesure de l'acquisition des valeurs de $\delta_i$, calculer la variation par rapport au temps de $\delta$,
- Tant que ladite variation est supérieure à un seuil bas, calculer des coefficients $A_{[wet,p]}$ par calcul direct ou par une régression appropriée de façon à modéliser la variation par rapport au temps de P par une courbe de variation qui est une fonction de ($\delta_i$, $A_{[wet, p]}$),
- Dès que ladite variation est supérieure à un seuil haut, déterminer un glissement cible $\delta^{Cwet}$ en utilisant au moins les dernières valeurs de $A_{[wet,p]}$.

Figure 1

Figure 2

Figure 3

Figure 4

**Office européen**

**des brevets**

**RAPPORT DE RECHERCHE EUROPEENNE**

Numéro de la demande

EP 05 00 0246

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 1 371 534 A (MICHELIN RECH TECH ; BOSCH GMBH ROBERT (DE); MICHELIN SOC TECH (FR)) 17 décembre 2003 (2003-12-17) * alinéas [0016] - [0021] * ----- | 1-11 | B60T8/00 G05B13/02 |
| A | EP 0 592 288 A (THOMSON CSF) 13 avril 1994 (1994-04-13) * page 4, ligne 1 - ligne 15 * * page 6, ligne 38 - page 7, ligne 40 * ----- | 1-11 | |
| A | WO 01/36240 A (RANCOURT YVON ; NEWTECH MECATRONIC INC (CA); MENARD CHRISTIAN (FR)) 25 mai 2001 (2001-05-25) * page 22, ligne 10 - ligne 27 * ----- | 1-11 | |

| | DOMAINES TECHNIQUES RECHERCHES (Int.Cl.7) |
|---|---|
| | B60T G05B |

Le présent rapport a été établi pour toutes les revendications

| Lieu de la recherche | Date d'achèvement de la recherche | Examinateur |
|---|---|---|
| Munich | 21 avril 2005 | Hasubek, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                     EP 05 00 0246

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-04-2005

| Document brevet cité au rapport de recherche | | | Date de publication | Membre(s) de la famille de brevet(s) | | Date de publication |
|---|---|---|---|---|---|---|
| EP 1371534 | A | | 17-12-2003 | FR | 2840867 A1 | 19-12-2003 |
| | | | | FR | 2842778 A1 | 30-01-2004 |
| | | | | CN | 1468765 A | 21-01-2004 |
| | | | | EP | 1371534 A1 | 17-12-2003 |
| | | | | JP | 2004249965 A | 09-09-2004 |
| | | | | US | 2004032165 A1 | 19-02-2004 |
| EP 0592288 | A | | 13-04-1994 | FR | 2696398 A1 | 08-04-1994 |
| | | | | DE | 69302555 D1 | 13-06-1996 |
| | | | | DE | 69302555 T2 | 19-09-1996 |
| | | | | EP | 0592288 A1 | 13-04-1994 |
| | | | | ES | 2087685 T3 | 16-07-1996 |
| | | | | US | 5409302 A | 25-04-1995 |
| WO 0136240 | A | | 25-05-2001 | AU | 1682901 A | 30-05-2001 |
| | | | | WO | 0136240 A1 | 25-05-2001 |
| | | | | CA | 2429391 A1 | 25-05-2001 |

EPO FORM P0460

Pour tout renseignement concernant cette annexe : voir Journal Officiel de l'Office européen des brevets, No.12/82